# EUROPÄISCHE PATENTANMELDUNG

(11) **EP 0 566 756 A1**
(43) Veröffentlichungstag der Anmeldung: **27.10.1993**
(21) Anmeldenummer: 92106817.7
(22) Anmeldetag: 21.04.1992
(51) Int. Cl.: G06F 11/00

(54) **Verfahren zur Fehlererkennung in numerischen Steuerungen**

(71) Anmelder: SIEMENS AKTIENGESELLSCHAFT, D-80333 München (DE)
(72) Erfinder: Wolfschmitt, Willy, Dipl.-Ing. (FH), W-8729 Eltmann (DE); Vogel, Michael, Dipl.-Ing, O-9056 Chemnitz (DE)

(57) **Zusammenfassung**

Zur Fehlererkennung in numerischen Steuerungen werden jedem Befehl (B80 bis B97), der eine Adressierung auslöst, Informationen (LT1 bis LTn, GI1 bis GIn) zugeordnet. Aufgrund dieser Informationen erkennt der Mikroprozessor (PZ), ob der Befehl (B80 bis B97) im Umfeld korrekt ausführbar ist und leitet im negativen Fall eine Fehlermeldung mit Anzeige des internen Steuerungszustands zum Fehlerzeitpunkt ein.

## Beschreibung

Bei numerischen Steuerungen gewinnt die detaillierte Mitteilung einer Ausfallursache an den Bediener (Softwareentwickler oder NC-Bediener beim Anwender) zunehmend an Bedeutung. Fehler der numerischen Steuerung werden bisher in der Regel durch das Servicepersonal des Steuerungsherstellers vorort behoben. Selbst dem Servicepersonal bereitet jedoch die Fehlererkennung große Schwierigkeiten, da herkömmliche Betriebsarten von numerischen Steuerungen das Erkennen von sporadischen Ausfällen, die durch Hardware- oder Softwarefehler hervorgerufen werden, nicht unterstützen. Der Rechner bleibt in einem solchen Fall einfach "stehen", ohne das dem Bediener Informationen über die Ausfallursache mitgeteilt werden. Um weiter mit dem Rechner arbeiten zu können, muß dieser neu hochgefahren werden. Die Absturzursache bleibt dem Anwender jedoch unbekannt, so daß die Behebung der Fehlerursache nur unter Hinzuziehen von Spezialisten vorort unter großem Aufwand möglich ist.

Herkömmliche Diagnoseprogramme, die nach dem Auftreten eines Fehlers aktiviert werden, sind nur sehr eingeschränkt in der Lage, den Zustand von Steuerung und Prozessor beim Auftreten des Fehlerfalls zu rekonstruieren. Durch eine andere herkömmliche Möglichkeit, bei der Diagnoseprogramme in Echtzeit quasi parallel zur Programmbearbeitung "mitlaufen", wird die Zeitbilanz und damit die Leistung der numerischen Steuerung negativ beeinflußt. Außerdem können solche Echtzeit-Diagnoseprogramme nur mit großem Aufwand in ein fertiges Softwaresystem eingebunden werden. Jedes Diagnoseprogramm kann zusätzliche neue Fehlerquellen mit sich bringen. Bei Verwendung eines zusätzlich installierten Testgeräts, wie z.B. eines ICE (Integrated Circuit Emulator) kann das Ergebnis verfälscht werden. Oft ist aber ein solcher Emulator nicht einsetzbar weil kein freier Steckplatz vorhanden ist. Weiterhin sind solche Testgeräte mit hohem finanziellen Aufwand verbunden.

Aufgabe der Erfindung ist es, unter Ausnutzung der Leistungsfähigkeit von modernen Prozessoren (Intel 386 DX Programmers Reference Manual) dem Bediener beim Auftreten eines Fehlers den internen Zustand einer numerischen Steuerung anzuzeigen.

Diese Aufgabe wird durch ein Verfahren zur Fehlererkennung in numerischen Steuerungen nach den Merkmalen des Hauptanspruchs gelöst.

Die besonderen Vorteile des Verfahrens bestehen darin, daß die Fehlererkennung ohne Zusatzhardware und ohne Zusatzsoftware im Anwenderprogramm auskommt und somit kein zusätzlicher Laufzeitbedarf für eine Diagnoseroutine notwendig wird. Da der Steuerungs- und Prozessorzustand nur zum Zeitpunkt des Fehlers zur Anzeige gebracht wird, wird die Zeitbilanz der numerischen Steuerung nicht durch während des fehlerfreien Betriebs mitlaufende Diagnosefunktionen verschlechtert.

Hochsporadische Fehler oder einmalige Effekte können nur mit dieser Methode identifiziert werden, wohingegen bei herkömmlichen Verfahren durch in die Anwenderprogramme eingebaute Diagnosesoftware nur "erwartete" Fehlerzustände erkannt werden können. Ein weiterer Vorteil des Verfahrens liegt darin, daß bei einer Erweiterung bzw. Änderung der Anwendersoftware keine Anpassung des Fehlerhandlers notwendig ist.

Nach einer vorteilhaften Ausbildung der Erfindung erfolgt auch eine Fehlermeldung, wenn der Befehl zwar als ausführbar erkannt, aber wegen eines fehlenden oder fehlerhaften Hardwarebauteils nicht ausführbar ist. Damit ist gewährleistet, daß auch Hardwarefehler schnell erkannt werden können.

Nach einer weiteren vorteilhaften Ausbildung der Erfindung werden die Eigenschaften der betreffenden Programm- oder Datensegmente während der Befehlsausführung beständig überprüft, so daß auch bei der Befehlsausführung auftretende Fehlerursachen sofort erkannt werden.

Durch die Zuordnung einer lokalen Speichertabelle zu jedem Programm (Task) wird sichergestellt, daß nicht versehentlich auf Daten- oder Programmsegmente eines anderen Programms (Task) zugegriffen werden kann. Sollen jedoch Programm- oder Datensegmente von mehreren Programmen benutzbar sein, so ist für Informationen bezüglich dieser gemeinsam benutzten Programm- und Datensegmente eine globale Speichertabelle vorgesehen. Damit lassen sich gemeinsam und einzeln benutzte Programm- und Datensegmente steuerungstechnisch eindeutig voneinander trennen.

Zur raschen Eingrenzung des Fehlers ist eine vorteilhafte Ausbildung der Erfindung vorgesehen, bei der mit der Fehlermeldung der Softwarestand, die Fehlerursache, die Programmnummer und die Inhalte der Prozessorregister angezeigt werden.

Ein weiterer Vorteil besteht darin, daß unmittelbar Fehlerreaktionen zur Gewährleistung der Sicherheit der numerisch gesteuerten Maschine ausgelöst werden, wenn der Befehl Eigenschaften der Segmente verletzt, oder wenn ein Hardwarefehler vorliegt.

Durch die frühzeitige Fehlererkennung ist eine Begrenzung der Auswirkung des Fehlers möglich. Um einen hohen Sicherheitsstandard zu erreichen, werden sofort nachdem ein Fehler erkannt wurde, die Antriebe stillgelegt. Dies war bisher nur indirekt über das Reagieren auf eine sogenannte Watchdog-Schaltung mit Zeitverzögerung möglich.

Ein zusätzlicher Vorteil des Verfahrens ist, daß keine Standardtreiber benutzt werden, um die Fehler zu erkennen und anzuzeigen. Denn die Funktionalität der anderen Software- und Hardwarekomponenten kann eingeschränkt sein. Damit erhält man eine bisher nicht übliche Funktionssicherheit.

Ein Ausführungsbeispiel der Erfindung ist in der Zeichnung dargestellt und wird im folgenden näher erläutert. Dabei zeigen:
- FIG 1: das Blockschaltbild einer numerischen Steuerung,
- FIG 2: die schematische Darstellung eines Programms der numerischen Steuerung.

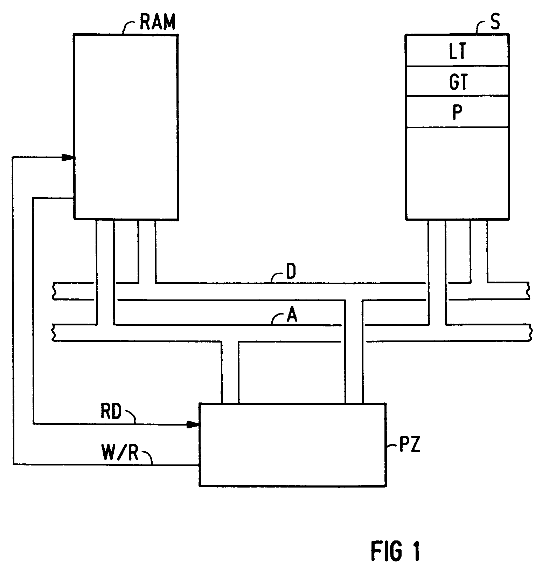

FIG 1 zeigt ein Blockschaltbild eines Teils einer an sich bekannten numerischen Steuerung. Dabei ist ein Mikroprozessor PZ, ein Schreib-Lese-Speicher RAM und ein Speicher S an Daten- und Adreßleitungen D, A angeschlossen. Der Schreib-Lese-Speicher RAM ist über eine Schreib-Lese-Zugriffsleitung W/R und über eine Rückmeldeleitung RD mit dem Mikroprozessor PZ verbunden. Außerdem sind die Leitungen, die den Schreib-Lese-Speicher RAM mit dem Adreßbus A verbinden, unterbrochen (auf diesen Sachverhalt wird weiter unten näher eingegangen). Der Speicher S teilt sich in Speicherbereiche für lokale Tabellen LT, für eine globale Tabelle GT und für Programme P auf.

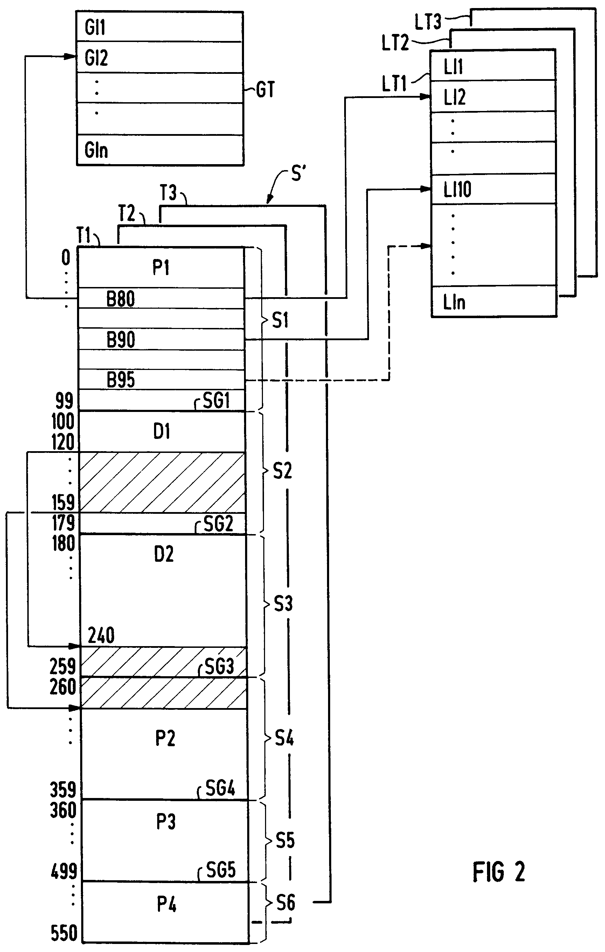

Die Bearbeitung der im Speicher S abgelegten Anwenderprogramme P und die Verwendung der globalen und der lokalen Tabellen LT, GT wird im folgenden anhand der FIG 2 beschrieben.

In FIG 2 sind schematisch drei Speicherbereiche S' gezeigt, die Bestandteil des aus FIG 1 bekannten Speichers S sind. Die Speicherbereiche S' beinhalten jeweils ein ablauffähiges Programm, die im folgenden als Tasks T1, T2, T3 bezeichnet werden. Die Tasks T1 bis T3 steuern z.B. die Servo- und Anzeigefunktionen, die Satzaufbereitung, etc., der numerischen Steuerung, wozu sie in der Regel prioritätsbezogen bearbeitet werden. Da alle Tasks prinzipiell gleich strukturiert sind, wird im folgenden nur auf den ersten Task T1 Bezug genommen. Der erste Task T1 verfügt über 0 bis 550 Speicherplätze, die in insgesamt sechs Segmente S1 bis S6 aufgeteilt sind. Zu jedem Segment ist die jeweilige Segmentgrenze SG1 bis SG6 angegeben. Die Segmente können entweder Programmsegmente P1 bis P4 oder Datensegmente D1, D2 sein.

Zusätzlich zu den Tasks T1 bis T3 sind in FIG 2 noch lokale Tabellen LT1 bis LT3 und eine globale Tabelle GT gezeigt. Diese Tabellen sind ebenfalls in Speicherform angelegt, wobei die lokalen Tabellen LT1 bis LT3 in ihren Speicherplätzen lokale Informationen LI1 bis LIn und die globale Tabelle GT globale Informationen GI1 bis GIn aufweisen.

Jedem Task T1 bis T3 und jedem Segment S1 bis S6 ist eine feste Nummer zugeordnet, die auch während der Taskbearbeitung nicht geändert wird. Dadurch erhält man zu jedem Zeitpunkt eine eindeutige Identifizierbarkeit des Systems beim Auftreten eines Fehlers (Bei herkömmlichen Verfahren werden diese Nummern dynamisch durch das Betriebssystem vergeben). Da die einmal vergebenen Nummern auch bei neuen Softwareständen konstant gehalten werden, ist eine einfache Fehlerbehandlung gewährleistet. Außerdem ist jedem Task T1 bis T3 jeweils eine lokale Tabelle LT1 bis LT3 zugeordnet, so daß nicht von einem Task T1 bis T3 auf eine lokale Tabelle LT1 bis LT3, die einem anderen Task zugeordnet ist, zugegriffen werden kann.

In den lokalen Tabellen LT1 bis LT3 sind einzelnen Befehlen B80 bis B95 der Task T1 lokale Informationen LI1 bis LIn zu jedem Segment S1 bis S3 einer Task zugeordnet, durch die die Eigenschaften der Segmente S1 bis S6 beschrieben werden. Diese Segmenteigenschaften beinhalten beispielsweise, ob ein Segment überhaupt vorhanden ist, die Lage des Segments, dessen Größe, ob es lesbar und/oder beschreibbar ist, ob es sich um ein lokales oder globales Segment und ob es sich um ein Programm- oder Datensegment handelt.

Der durch die Zuordnung einer lokalen Tabelle LT1 bis LT3 erreichte Fehlererkennungsmechanismus funktioniert wie folgt.

Der aus FIG 1 bekannte Mikroprozessor arbeitet beispielsweise den ersten Task T1 ab. Dazu wird der Task T1 vom Speicherplatz O des ersten Programmsegments P1 gestartet. Mit jeder Adressierung eines außerhalb des Prozessors liegenden Hardwarebauteils, wird die zur Adresse bzw. die zum jeweiligen Segment S1 bis S6 gehörige lokale Information LI1 bis LIn vom Mikroprozessor aus der lokalen Tabelle LT1 gelesen und daraufhin überprüft, ob der mit dieser Adresse verbundene Befehl ausführbar ist. Die für ein Segment S1 bis S6 geladene Information LI1 bis LIn (oder GI1 bis GIn) bleibt bis zum nächsten Segmentwechsel im Mikroprozessor, so daß bei einer Adressierung innerhalb eines Segments S1 bis S6 nicht wiederholt auf die lokale bzw. globale Tabelle LT1 bis LT3, GT zugegriffen werden braucht. Wenn beispielsweise der im Programmsegment P1 abzuarbeitende Befehl B80 die Kopie des schraffierten Datenbereichs aus dem Datensegment D1 in das Datensegment D2 beinhaltet, so wird gleichzeitig die Zugehörige lokale Information LI2 gelesen und daraufhin überprüft ob das Datensegment D1 (bzw. das Segment S2) überhaupt existiert und wenn ja, ob es lesbar ist. Daraufhin wird mit der Kopie des ersten Bytes ab dem Speicherplatz 120 des Datensegments D1 begonnen und der Speicherplatz 240 des Datensegments D2 (bzw. des Segmentes S3) wird adressiert. Mit dieser Adressierung wird wiederum eine lokale Information LI aus der lokalen Tabelle LT1 gelesen und festgestellt, ob das Segment S3 existiert und beschreibbar ist und ob der Speicherplatz 240 zum Segment S3 gehört. Dieses Verfahren wird für jedes zu kopierende Byte fortgesetzt. Anhand des gestrichelt gekennzeichneten Bereichs zwischen den Segmenten S3 und S4 ist zu erkennen, daß der Speicherplatz 259 der letzte Speicherplatz des Segmentes S3 ist. Da die Daten aus dem Datensegment S2 (D1) jedoch noch nicht vollständig kopiert sind, würde beim weiteren Beschreiben die Segmentgrenze SG3 des Segments S3 überschritten werden und das folgende Datum in den Speicherplatz 260, der bereits zum Segment S4 gehört, geschrieben werden. Damit würde jedoch das im Segment S4 stehende Programmsegment P2 überschrieben werden, so daß es, wenn ein herkömmliches Verfahren verwendet werden würde, spätestens beim Aufruf des Programmsegmentes P2 zu einem Absturz der numerischen Steuerung kommen würde. Da jedoch erfindungsgemäß über die lokalen Informationen LI1 bis LIn auch die Segmentgrenzen überwacht werden, detektiert der Prozessor beim Überschreiten der Segmentgrenze SG3 einen Fehler, der zum sofortigen Abbruch des Tasks und zu einer Fehlermeldung und zur unmittelbaren Auslösung von Sicherheitsreaktionen (z.B. umgehendes Stillsetzen der Antriebe) führt. Eine Beschreibung eines Speicherplatzes des Programmsegments S4 wird zusätzlich dadurch ausgeschlossen, daß die zur Adresse des Speicherplatz 260 gehörende lokale Information LI das Beschreiben des Segmentes S4 verbietet.

Im weiteren Verlauf der Programmbearbeitung soll durch den Befehl B90 ein Wechsel vom Programmsegment P1 zum Programmsegment P3 erfolgen. Auch hier wird wieder durch die entsprechende Adressierung die zugehörige lokale Information LI10 in den Prozessor geladen und daraufhin überprüft, ob das Programmsegment P3 bzw. das Segment S5 vorhanden ist ob es sich um ein Programmsegment handelt und ob es lesbar bzw. ausführbar ist. Falls dies nicht der Fall ist, wird wieder eine Fehlermeldung ausgegeben.

Nun kann es vorkommen, daß zwar alle Eigenschaften der jeweiligen lokalen Informationen LI1 bis LIn erfüllt sind, jedoch ein Fehler in der Hardware vorliegt, der die Ausführung des jeweiligen Befehls unmöglich macht.

Angenommen, der Befehl B95 beinhalte einen Schreibzugriff auf den aus FIG 1 bekannten Schreib-Lese-Speicher RAM. Mit der Adressierung des Speichers RAM wird gleichzeitig die zur Adresse gehörige lokale Information LI aus der lokalen Tabelle LT1 gelesen und festgestellt, daß der Speicher RAM existiert und daß es sich um einen Schreib-Lese-Speicher handelt. Damit ist der Befehl als ausführbar erkannt. Da jedoch die Adreßleitungen, die den Speicher RAM mit dem Adreßbus A verbinden, unterbrochen sind, wird das vom Prozessor PZ über die Schreib-Lese-Zugriffsleitung W/R ausgegebene Signal vom Speicherbaustein RAM nicht über die Bestätigungsleitung RD bestätigt. Der Prozessor PZ wird daraufhin eine Interruptroutine auslösen, die ebenfalls zur Fehlermeldung führt.

Mit jedem vom Mikroprozessor erkannten Fehler wird eine Fehlerroutine ausgelöst und der Prozessorzustand im Moment des Fehlerauftritts gerettet. Daraufhin wird eine Fehlermeldung ausgegeben und der Fehlertyp sowie gegebenenfalls der Fehlercode, der einen Hinweis auf das Segment gibt, dessen Abarbeitung zu dem Fehler geführt hat, sowie die Tasknummer durch die der fehlerhafte Softwarebereich direkt erkennbar ist, angezeigt. Außerdem werden die Inhalte der Prozessorregister, sowie der Stack's und der Flag's angezeigt. Es ist empfehlenswert, auch den Softwarestand und das Datum von dessen Erstellung bzw. Implementierung mit anzugeben. Diese umfangreichen Informationen unterstützen die Fehlerlokalisierung und -behebung entscheidend. Falls beispielsweise der Werkzeugmaschinenhersteller eigene Software in Form von zusätzlichen Tasks in die Standardsteuerung einbringt, ist auch eine Differenzierung der Fehlerquellen zwischen Standard- und Zusatzsoftware möglich.

In der globalen Tabelle GT sind globale Informationen GI1 bis GIn abgelegt, die Auskunft über alle Daten und Programmsegmente geben, auf die von verschiedenen Tasks T1 bis T3 zugegriffen werden kann. Das Verfahren entspricht dabei dem anhand der lokalen Tabellen LT1 bis LT3 beschriebenen Verfahren.

Folgende möglicherweise in der Steuerung auftretende Fehler und Ausfälle werden entsprechend lokalisiert und angezeigt:
- Hardwarefehler:: - Quittungsverzüge beim Lesen und Schreiben
- Paritätsfehler
- Prozessor-Shutdown
- Software:: - Divisionsfehler
- Überlauffehler
- Software:: - Numerikprozessorfehler
- nichtausführbare Befehle
- Überwachung des Segmentschutzes
- Stacküberwachung
- Segmentgrößenüberwachung
- Zugriffsverriegelung
- Schutzrechtsverletzung
- Überprüfung, ob Segment vorhanden.

## Patentansprüche

1. Verfahren zur Fehlererkennung in numerischen Steuerungen mit folgenden Merkmalen:
1.1 In der numerischen Steuerung werden mehrere Programme (T1 bis T3) abgearbeitet, wobei jedem Programm (T1 bis T3) eine feste Programmnummer zugeordnet ist und wobei jedes Programm (T1 bis T3) aus mehreren Programm- (P1 bis P4) und Datensegmenten mit ebenfalls festen Segmentnummern (D1,D2) besteht,
1.2 in mindestens einer Speichertabelle (LT1 bis LT3) werden jedem Programm- (P1 bis P4) und Datensegment (D1,D2) Informationen (LI1 bis LIn) über dessen Eigenschaften fest zugeordnet,
1.3 bei jeder durch einen Befehl (B80,B90,B95) ausgelösten Adressierung eines Hardwarebausteins (S,RAM) durch den Mikroprozessor (PZ) der numerischen Steuerung wird die zu der Adresse gehörige Information (LI1 bis LIn), vom Mikroprozessor (PZ) daraufhin überprüft, ob der Befehl ausführbar ist,
1.4 falls der Befehl Eigenschaften der Segmente (P1 bis P4, D1,D2) verletzt, wird eine Fehlermeldung mit dem internen Steuerungszustand zum Fehlerzeitpunkt ausgegeben.

2. Verfahren nach Anspruch 1, wobei eine Fehlermeldung nach 1.4 erfolgt, wenn der Befehl zwar als ausführbar erkannt wird, aber wegen eines fehlenden oder fehlerhaften Hardwarebauteils (RAM,AP) nicht ausführbar ist.

3. Verfahren nach Anspruch 1 oder 2, wobei die Eigenschaften der betreffenden Programm- (P1 bis P4) oder Datensegmente (D1, D2) während der Befehlsausführung beständig überprüft werden.

4. Verfahren nach einem der vorstehenden Ansprüche, wobei jedem Programm (T1 bis T3) eine eigene lokale Speichertabelle (LT1 bis LTn) zugeordnet ist.

5. Verfahren nach einem der vorstehenden Ansprüche, wobei die Informationen über von mehreren Programmen (T1 bis T3) gemeinsam benutzten Programm- (P1 bis P4) und Datensegmenten (D1,D2) in einer globalen Speichertabelle (GT) abgelegt sind.

6. Verfahren nach einem der vorstehenden Ansprüche, wobei mit der Fehlermeldung der Softwarestand, die Fehlerursache, die Tasknummer und die Inhalte der Prozessorregister angezeigt werden.

7. Verfahren nach einem der vorstehenden Ansprüche, wobei unmittelbar Fehlerreaktionen zur Gewährleistung der Sicherheit der numerisch gesteuerten Maschine ausgelöst werden, wenn der Befehl Eigenschaften der Segmente (P1 bis P4, D1, D2) verletzt, oder wenn ein Hardwarefehler vorliegt.
